# FASCICULE DE BREVET EUROPEEN

(11) **EP 3 891 430 B1**
(45) Date de publication et mention de la délivrance du brevet: **01.01.2025**
(21) Numéro de dépôt: 19842785.8
(22) Date de dépôt: 25.11.2019
(51) Int. Cl.: F17C 5/02, F17C 5/06

(54) **RÉSERVOIR DE STOCKAGE DE FLUIDE CRYOGÉNIQUE ET SON PROCÉDÉ DE REMPLISSAGE**
KRYOGENER FLÜSSIGKEITSLAGERTANK UND VERFAHREN ZUM FÜLLEN DESSELBEN
CRYOGENIC FLUID STORAGE TANK AND METHOD FOR FILLING SAME

(30) Priorité: 06.12.2018 FR 1872427
(43) Date de publication de la demande: 13.10.2021
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: BEUNEKEN, Olivier, 93150 LE BLANC MESNIL (FR); GENESTE, Didier, 75321 PARIS (FR); POINTEAU, Regis, 75321 PARIS (FR)
(74) Mandataire: Air Liquide
(86) Numéro de dépôt international: PCT/FR2019/052791
(87) Numéro de publication internationale: WO 2020/115393

(56) Documents cités:
- WO-A1-2014/091060
- FR-A1- 2 238 893
- FR-A1- 2 857 432
- FR-A1- 2 941 767
- JP-A- H0 634 099
- US-A- 2 993 344

## Description

L'invention concerne un réservoir de stockage de fluide cryogénique ainsi que son procédé de remplissage.

JPH0634099A ainsi que WO2014/091060A1 divulguent un tel réservoir.

L'invention concerne plus particulièrement un réservoir de stockage de fluide cryogénique et notamment d'un mélange diphasique de liquide et de gaz, comprenant une première enveloppe destinée à contenir le fluide cryogénique au moins une conduite de soutirage ayant une extrémité amont reliée à la première enveloppe et configurée pour permettre le soutirage de fluide contenu dans la première enveloppe vers l'extérieur du réservoir, un circuit de remplissage du réservoir, le circuit de remplissage comprenant une première conduite de remplissage ayant une extrémité amont destinée à être reliée à une source de fluide et une extrémité aval reliée à la portion inférieure de la première enveloppe, le circuit de remplissage comprenant une seconde conduite de remplissage ayant une extrémité amont destinée à être reliée à la source de fluide et une extrémité aval reliée à la portion supérieure de la première enveloppe, les extrémités amont des première et seconde conduites de remplissage étant destinées à être raccordées simultanément à une même source de fluide, le circuit de remplissage comprenant un ensemble de vanne(s) de répartition configuré pour permettre une répartition du fluide provenant de la source de fluide dans les conduites de remplissage, le réservoir comprenant un ensemble de capteur(s) mesurant la pression dans la première enveloppe.

Actuellement le remplissage de réservoirs de réservoirs cryogéniques liquide fixes (« bulks ») à partir de semi-remorques de livraison est essentiellement manuel.

Ceci nécessite une formation appropriée du livreur qui doit tenir compte de divers paramètres dont la pression dans le flexible de livraison, la pression dans le réservoir ou cours du remplissage, la pression maximale admissible dans le réservoir...

De plus, les vannes de remplissages utilisées sont généralement mal adaptées pour réguler un débit de fluide cryogénique et nécessitent une maintenance fréquente et l'utilisation de vannes additionnelles.

Le livreur doit en outre interrompre le remplissage lorsque le réservoir est plein.

Ainsi, le remplissage n'est pas souvent optimisé (durée et capacité de la pompe utilisée) et dépend essentiellement de l'expérience et des aptitudes du livreur.

Diverses méthodes ont été envisagées pour automatiser la sécurisation de cette opération de remplissage. On pourra se référer par exemple aux documents JP H06 34099A, WO2014/091060A1, FR2587432A1, FR2896302 ou FR2998642A1.

Les documents ne permettent pas de simplifier et sécuriser ou fiabiliser suffisamment le remplissage d'un tel réservoir.

Un but de la présente invention est de pallier tout ou partie des inconvénients de l'art antérieur relevés ci-dessus.

A cette fin, le réservoir selon l'invention, par ailleurs conforme à la définition générique qu'en donne le préambule ci-dessus, est essentiellement caractérisé en ce que l'ensemble de vanne(s) de répartition est configuré pour réguler automatiquement la pression dans la première enveloppe à une consigne de pression prédéterminée lors d'un remplissage en assurant une répartition automatique du débit de fluide provenant de la source dans les conduites de remplissage en fonction de la consigne de pression et de la pression mesurée par l'ensemble de capteur(s).

Par ailleurs, des modes de réalisation de l'invention peuvent comporter l'une ou plusieurs des caractéristiques suivantes :
- l'ensemble de vanne(s) de répartition comprend au moins une vanne actionnée pneumatiquement et/ou via un ensemble d'organe (s) de rappel notamment un ou des ressorts,
- l'ensemble de vanne(s) de répartition est sensible à la pression mesurée par l'ensemble de capteur(s) mesurant la pression dans le première enveloppe, c'est-à-dire que l'ensemble de vanne(s) de répartition présente au moins un élément mobile obturant ou ouvrant un passage pour le fluide entre la source de fluide et le ou les conduites de remplissage, ledit élément mobile étant déplacé dans une pluralité de positions selon la différence de pression entre d'une part un effort de tarage correspondant à la consigne de pression prédéterminée et, d'autre part, la pression mesurée par l'ensemble de capteur(s),
- l'ensemble de vanne(s) de répartition comprend au moins une vanne pilotée électriquement et un dispositif électronique de commande de la vanne pilotée configuré pour contrôler l'ouverture et la fermeture de la vanne en fonction d'une part de la consigne de pression prédéterminée et, d'autre part, de la pression mesurée par l'ensemble de capteur(s),
- l'ensemble de vanne(s) de répartition comprend un boîtier comportant une entrée de fluide destinée à être reliée à la source, deux sorties reliées respectivement aux deux conduites de remplissage et un répartiteur mobile en translation et/ou en rotation dans le boîtier et assurant une mise en relation ou non de l'entrée avec la ou les sorties selon la position du répartiteur mobile,
- le boîtier de l'ensemble de vanne(s) comprend une entrée supplémentaire reliée à l'ensemble de capteur(s) et/ou à une électronique de commande et/ou à un ensemble de commande mécanique et/ou pneumatique tel que notamment un ensemble de ressort(s) et/ou membrane(s),
- l'ensemble de vanne(s) de répartition est configuré pour interrompre tout passage de fluide provenant de la source vers les conduites de remplissage lorsque la pression mesurée par l'ensemble de capteur(s) est supérieure à un premier seuil de sécurité déterminé,
- l'ensemble de vanne(s) de répartition est configuré pour réaliser une répartition automatique du débit de fluide provenant de la source majoritairement, et de préférence exclusivement, dans la seconde conduite de remplissage lorsque la pression mesurée par l'ensemble de capteur(s) est inférieure au seuil de sécurité et supérieur à la consigne de pression,
- l'ensemble de vanne(s) de répartition est configuré pour réaliser une répartition automatique du débit de fluide provenant de la source simultanément dans les deux conduites de remplissage lorsque la pression mesurée par l'ensemble de capteur(s) est égale à la consigne de pression,
- l'ensemble de vanne(s) de répartition est configurée pour réaliser une répartition automatique du débit de fluide provenant de la source majoritairement et de préférence exclusivement dans la première conduite de remplissage lorsque la pression mesurée par l'ensemble de capteur(s) est inférieure la consigne de pression,
- le robinet comporte un organe de détection destiné à mesurer la pression dans la source de fluide et en ce que l'ensemble de vanne(s) de répartition est configuré pour interrompre tout passage de fluide provenant de la source vers les conduites de remplissage lorsque la pression mesurée par l'organe de détection est inférieure à un second seuil déterminé,
- la pression mesurée par l'ensemble de capteur(s) comprend au moins l'un parmi : la pression en partie supérieure de la première l'enveloppe, la pression en partie inférieure de la première l'enveloppe, un différentiel de pression entre la pression en partie supérieure de la première l'enveloppe et la pression en partie inférieure de la première l'enveloppe,
- le réservoir comprend une conduite de mise en pression de l'enveloppe interne comprenant une extrémité amont reliée à l'extrémité inférieure de la première enveloppe et une extrémité aval reliée à la partie supérieure de la première enveloppe, la conduite de mise en pression comprenant au moins une vanne de régulation et un réchauffeur, notamment un échangeur de chaleur de vaporisation,
- la au moins une vanne de régulation de la conduite de mise en pression est comprise ou constituée par l'ensemble de vanne(s) de répartition,
- le réservoir comprend une bride de connexion ayant une extrémité reliée l'ensemble de vanne(s) et en particulier en liaison fluidique avec les extrémités amont des première et seconde conduites de remplissage, et une extrémité destinée à être raccordée avec une source de fluide sous pression, notamment une extrémité d'un flexible d'un camion de livraison de de fluide sous pression,
- le réservoir comprend un organe actionnable manuellement de commande de la position de l'ensemble de vannes pour forcer manuellement la répartition du débit de fluide provenant de la source dans les conduites de remplissage,
- le réservoir comprend un afficheur de l'état ou de la configuration oui position de l'ensemble de vannes,
- le réservoir comprend, par exemple au niveau du circuit de remplissage, un organe de protection tel qu'une soupape et/ou un disque de rupture permettant une libération de fluide vers l'extérieur en cas de pression excédant une limite,
- la vanne de régulation est configurée pour maintenir automatiquement la pression dans la première enveloppe à une valeur minimale en assurant, lorsque la pression dans la première enveloppe est inférieure à ladite première valeur, une circulation de liquide prélevé dans la première enveloppe dans le réchauffeur et une réinjection de ce fluide réchauffé dans la première enveloppe,
- la vanne de régulation de la conduite de mise en pression est sensible à la pression mesurée par l'ensemble de capteur(s) mesurant la pression dans le première enveloppe, c'est-à-dire que la vanne de régulation comprend au moins un élément mobile obturant ou ouvrant un passage pour le fluide dans la conduite de mise en pression ledit élément mobile étant ouvert ou fermé selon la différence de pression entre d'une part un effort de tarage correspondant à une consigne de pression minimale et, d'autre part, la pression mesurée par l'ensemble de capteur(s),
- l'ensemble de vanne(s) de répartition est situé sur la conduite de mise en pression,
- le boîtier de l'ensemble de vanne (s) de répartition comprend une entrée de fluide reliée à l'extrémité amont de la conduite de mise en pression et une sortie reliée la portion de conduite de mise en pression comprenant le réchauffeur,
- la conduite de mise en pression comprend une portion commune avec au moins l'une parmi : la première conduite de remplissage, la seconde conduite de remplissage,
- la conduite de soutirage de gaz comprend une première extrémité amont reliée à l'extrémité inférieure de l'enveloppe interne,
- le réservoir comprend une conduite de soutirage de gaz comprenant une seconde extrémité amont reliée à l'extrémité supérieure de l'enveloppe interne et une extrémité aval destinée à être reliée à un utilisateur de gaz,
- la conduite de soutirage de gaz comprend au moins parmi : une vanne, un réchauffeur, notamment un échangeur de chaleur,
- le réservoir comprend un régulateur de mise à l'air relié à l'extrémité supérieure de l'enveloppe interne, notamment via l'extrémité aval de la seconde conduite de remplissage.

L'invention concerne également un procédé de remplissage d'un réservoir de stockage de fluide cryogénique conforme à l'une quelconque des caractéristiques ci-dessus ou ci-après avec du gaz liquéfié, le procédé comprenant une étape de connexion d'une source de gaz liquéfié sous pression au réservoir dans lequel une connexion fluidique est réalisée entre la source de gaz liquéfié et les extrémités amont des première et seconde conduites de remplissage, une étape de mesure de la pression dans l'enveloppe interne du réservoir via l'ensemble de capteur(s), une étape de transfert de fluide depuis la source vers l'intérieur de l'enveloppe interne et une étape de répartition du flux de fluide dans les deux conduites de remplissage en fonction d'une consigne de pression prédéterminée et de la pression mesurée par l'ensemble de capteur(s).

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
[Fig. 1] représente une vue coupe verticale, schématique et partielle, illustrant un exemple de structure et de fonctionnement d'un exemple possible de réalisation de réservoir,
[Fig. 2] représente une vue coupe, schématique et partielle, illustrant un détail d'un premier exemple de structure et de fonctionnement d'une vanne de répartition pouvant faire partie d'un tel réservoir,
[Fig. 3] représente une vue schématique et partielle, illustrant un autre exemple de structure et de fonctionnement d'une vanne de répartition pouvant faire partie d'un tel réservoir,
[Fig. 4] représente une vue schématique et partielle, illustrant un autre exemple de structure et de fonctionnement d'une vanne de répartition pouvant faire partie d'un tel réservoir,
[Fig. 5] représente une vue schématique et partielle, illustrant un autre exemple de structure et de fonctionnement d'une vanne de répartition pouvant faire partie d'un tel réservoir,
[Fig.6] représente une vue schématique et partielle, illustrant un autre exemple de structure et de fonctionnement d'une vanne de répartition pouvant faire partie d'un tel réservoir,
[Fig. 7] représente une vue coupe, schématique et partielle, illustrant un détail d'un second exemple de structure et de fonctionnement d'une vanne de répartition pouvant faire partie d'un tel réservoir.

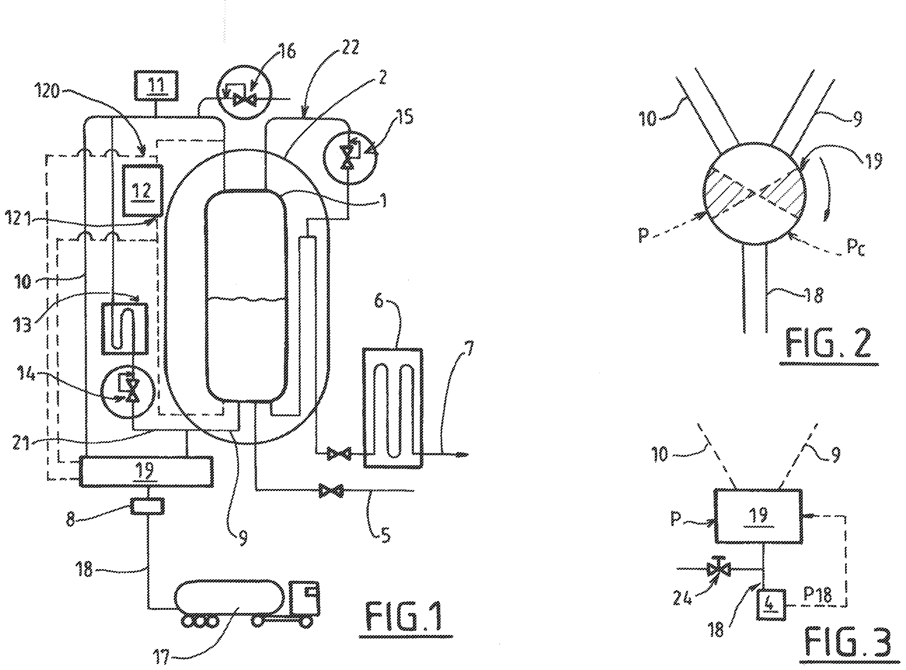

Le réservoir représenté à la [Fig. 1] est un réservoir de stockage de fluide cryogénique et notamment d'un mélange diphasique de liquide et de gaz.

Le réservoir est de préférence un réservoir cryogénique à double enveloppe, comprenant une première enveloppe 1 interne destinée à contenir le fluide cryogénique. La première enveloppe 1 est de préférence entourée d'une seconde enveloppe 2 et le réservoir comprend une isolation thermique dans l'espacement entre les deux enveloppes (notamment un espace sous vide).

Typiquement, la première enveloppe 1 contient une phase liquide en partie inférieure (fluide cryogénique sous forme liquide à très basse température, par exemple de l'azote est à une température de -185°c sous une pression de 2 bar, la valeur de la température est fonction de la pression à l'équilibre) et une phase gazeuse en partie supérieure (« ciel gazeux »).

Classiquement, le réservoir comprend au moins une conduite 5, 7 de soutirage ayant une extrémité amont reliée à la première enveloppe 1 et configurée pour permettre le soutirage de fluide contenu dans la première enveloppe 1 vers l'extérieur du réservoir. Par exemple, et comme illustré, le réservoir peut comporter une première conduite 5 de soutirage dont l'extrémité amont est reliée à la partie inférieure de la première enveloppe 1 pour soutirer du liquide (et de préférence via une vanne).

De même, le réservoir peut comporter une seconde conduite 7 de soutirage dont une première extrémité amont est reliée à la partie inférieure de la première enveloppe 1 pour soutirer du liquide. La seconde conduite 7 de soutirage peut comporter un vaporiseur 6 (réchauffeur) et au moins une vanne pour fournir en aval à un utilisateur du gaz vaporisé. Ce réchauffeur 6 extérieur d'utilisation peut être un échangeur thermique servant transformer le liquide cryogénique puisé dans le réservoir intérieur en gaz par échange avec l'atmosphère ambient.

Comme illustré à la [Fig. 1], la seconde conduite 7 de soutirage peut comporter une seconde extrémité amont reliée à l'extrémité supérieure de la première enveloppe 1. Cette seconde extrémité amont peut être munie d'une vanne 15 ou d'un régulateur de pression.

Cette vanne 15 ou économiseur est configurée pour ouvrir le passage entre la phase gazeuse de la première enveloppe 1 et l'extérieur en aval lorsque la pression dans cette partie supérieure de la première enveloppe 1 est supérieure à une pression prédéterminée et par exemple préréglée. Par exemple, cette pression prédéterminée est égale à la pression de service du réservoir + 0,5 bar. Ceci permet de réguler à la baisse, lorsque nécessaire, la pression dans la phase gazeuse de la première enveloppe 1 lors d'une utilisation de gaz issu du réservoir.

Classiquement, le réservoir peut comprendre un organe 11 de protection tel qu'une soupape et/ou un disque de rupture permettant une libération de fluide vers l'extérieur en cas de pression excédant une limite dans la première enveloppe 1. Cette limite est typiquement la pression maximale admissible du réservoir (donnée par le constructeur).

De plus, le réservoir peut comporter un régulateur 16 de mise à l'air configuré pour ouvrir un passage entre la phase gazeuse et l'extérieur (l'atmosphère) lorsque la pression dans la phase gazeuse est supérieure à une pression réglée sur l'appareil (typiquement à la pression d'ouverture de l'organe 11 de protection moins un bar).

Ceci permet de réguler, lorsque nécessaire, la baisse la pression de la phase gazeuse en cas de non utilisation de gaz par le client. En effet, lorsqu'il n'est pas soutiré de gaz pendant une longue période cela provoque une montée en pression naturelle au sein de la première enveloppe 1.

Le réservoir comporte un circuit de remplissage de la première enveloppe 1.

Ce circuit de remplissage comprend une première conduite 9 de remplissage ayant une extrémité amont destinée à être reliée à une source de fluide (tel qu'un flexible 18 d'un conteneur 17 transporté par un camion) et une extrémité aval reliée à la portion inférieure de la première enveloppe 1.

Le circuit de remplissage comprend une seconde conduite 10 de remplissage ayant une extrémité amont destinée à être reliée à la source 17 de fluide et une extrémité aval reliée à la portion supérieure de la première enveloppe 1.

Les extrémités amont des première 9 et seconde 10 conduites de remplissage sont configurées pour être raccordées simultanément à la même source 17 de fluide, par exemple au niveau d'une entrée ou bride 8 commune.

Le circuit de remplissage comporte un ensemble 19 de vanne(s) de répartition configuré pour permettre une répartition du fluide provenant de la source 17 de fluide dans une ou l'autre ou dans les conduites 9, 10 de remplissage.

Le réservoir comprend un ensemble 12 de capteur(s) mesurant la pression dans la première enveloppe 1.

L'ensemble 19 de vanne(s) de répartition est configuré pour réguler automatiquement la pression dans la première enveloppe 1 à une consigne de pression prédéterminée (Pc) lors d'un remplissage en assurant une répartition automatique du débit de fluide provenant de la source 17 entre les conduites 9, 10 de remplissage en fonction de la consigne de pression Pc et de la pression mesurée par l'ensemble 12 de capteur(s).

La consigne de pression Pc est prédéfinie est typiquement la pression de service du réservoir (par exemple, en fonction du besoin de l'utilisateur du gaz et de l'installation en aval du réservoir). Cette pression peut être la pression à laquelle doit être maintenue le fluide du ciel gazeux selon l'usage dans le ciel gazeux, ou la pression à laquelle doit être maintenue la partie liquide en bas du réservoir (fluide dans sa phase liquide).

La pression maximale de service du réservoir est généralement comprise entre un et quarante bar notamment entre 7 et 12 bar selon les types et tailles de réservoirs. Cette pression maximale de service (ou « maximum allowable working pressure » en anglais) est par exemple définie par le constructeur du réservoir

De préférence, le réservoir comprend une borne 8 de remplissage ou bride de connexion du flexible 19 de livraison de la source 17.

L'ensemble de capteur(s) 12 peut comprendre une platine de mesure de la pression et éventuellement du niveau de liquide.

Cet ensemble 12 de capteur(s) mesure de préférence (et affiche et/ou transmets le cas échéant) la pression régnant dans la phase gazeuse (partie supérieure) et/ou la pression en partie inférieure (en phase liquide) ainsi que le niveau de liquide de la phase liquide (partie inférieure de la première enveloppe). Ce niveau de liquide peut être déterminé par la différence de pression entre le bas et le haut de la première enveloppe de laquelle on déduit la hauteur de la colonne de fluide hydrostatique.

La pression du fluide à l'extrémité inférieure de la première enveloppe est égale à la pression de la phase gazeuse augmentée de la pression hydrostatique générée par la hauteur de liquide de la phase 3 liquide.

A cet effet, l'ensemble de capteur(s) 12 peut comporter une prise de pression de la phase gazeuse (mesure en partie supérieure de la première enveloppe 1) et une prise de pression de la phase liquide (mesure en partie inférieure de la première enveloppe 1). Ces deux prises de pression sont symbolisées par les extrémités des lignes pointillées reliées en partie basse et haute du réservoir et au boîtier 12 de mesure.

Classiquement, l'ensemble de capteur(s) 12 peut comprendre des capteurs du type mesurant une pression statique ou/et une pression différentielle.

Comme illustré à la [Fig. 1], le réservoir peut comprendre également une conduite 21 de mise en pression de la première enveloppe 1 comprenant une extrémité amont reliée à l'extrémité inférieure du réservoir et une extrémité aval reliée à la partie supérieure de la première enveloppe 1. La conduite 21 de mise en pression comprend au moins une vanne 14 de régulation (ou régulateur) et un réchauffeur 13, notamment un échangeur de chaleur de vaporisation.

Le réchauffeur 13 permet la vaporisation de liquide prélevé en bas de la première enveloppe 1 pour générer le gaz qui permet, lorsque nécessaire, d'élever la pression de la phase gazeuse par l'intermédiaire du régulateur 14. Ce régulateur 14 de mise en pression ouvre si besoin le passage du liquide depuis la phase liquide vers sa phase gazeuse lorsque la pression de la phase gazeuse est inférieure à une pression réglée sur l'appareil notamment la pression de service.

La vanne 14 de régulation de la conduite 21 de mise en pression peut être pneumatique ou commandée et peut notamment être sensible à la pression mesurée par l'ensemble 12 de capteur(s) mesurant la pression dans le première enveloppe 1. Par exemple, la vanne de régulation 14 peut comprendre au moins un élément mobile obturant ou ouvrant un passage pour le fluide dans la conduite 21 de mise en pression, ledit élément mobile étant ouvert ou fermé selon la différence de pression entre d'une part un effort de tarage (effort d'un ressort ou d'une contre-pression par exemple) correspondant à une consigne de pression minimale et, d'autre part, la pression mesurée par l'ensemble 12 de capteur(s).

A noter que les fonctions des vannes 14 de régulation (mise en pression) et 15 (économiseur) peuvent être regroupées dans un seul appareil dit « régulateur-économiseur ».

L'ensemble 19 de vanne(s) de répartition peut être configuré pour réguler automatiquement la pression dans la première enveloppe 1 à la consigne de pression prédéterminée Pc du réservoir lors du remplissage. Cette régulation est réalisée en remplissant le première enveloppe 1 via uniquement dans la première conduite de remplissage 9 ou uniquement via la seconde conduite de remplissage 10 ou via les deux conduites simultanément.

L'ensemble de vannes 19 régule le débit (section de passage) et la répartition du liquide cryogénique fourni par la source 17 dans les deux conduites 9, 10 pour maintenir ou atteindre cette pression consigne Pc.

L'ensemble de vanne (s) 19 peut comprendre au moins une vanne pneumatique. L' ensemble de vanne(s) 19 est un dispositif uniquement mécanique et/ou pneumatique.

Par exemple une pression est maintenue sur une vanne (pression de gaz et/ou ressort ou équivalent) qui transforme une vanne en régulateur de pression.

Par exemple, l'ensemble 19 de vanne(s) de répartition est sensible à la pression mesurée par l'ensemble 12 de capteur(s) mesurant la pression dans le première enveloppe 1. C'est-à-dire que l'ensemble 19 de vanne(s) de répartition peut comporter au moins un élément mobile obturant ou ouvrant un passage pour le fluide entre la source 17 de fluide et le ou les conduites 9, 10 de remplissage. Cet élément mobile est par exemple déplacé dans une pluralité de positions selon la différence de pression entre d'une part un effort de tarage correspondant à la consigne de pression prédéterminée Pc et, d'autre part, la pression mesurée par l'ensemble 12 de capteur(s).

L'ensemble 19 de vanne(s) de répartition est logé dans un boîtier comportant une entrée de fluide destinée à être reliée à la source 17 (extrémité du flexible 19 par exemple), deux sorties reliées respectivement aux deux conduites 9, 10 de remplissage et/ou un répartiteur (l'élément mobile de répartition) déplaçable dans le boîtier pour assurer une mise en relation ou non de l'entrée avec la ou les sorties selon la pression mesurée par l'ensemble 12 de capteur(s) et la consigne de pression Pc.

Le boîtier de l'ensemble 19 de vanne(s) peut comprendre au moins une entrée reliée à la l'ensemble de capteur(s) 12 fournissant la ou les mesures de pression P (pression en partie supérieure, pression en partie inférieure, mesure de pression dans la source 17 notamment au niveau du flexible 18). Par exemple, comme schématisé à la figure 3, un organe 4 de détection (intégré à ou distinct de l'ensemble 12 de capteurs) mesure la pression P18 dans la source 17, 18 de fluide (par exemple au niveau du flexible) et l'ensemble 19 de vanne(s) de répartition peut être configuré pour interrompre tout passage de fluide provenant de la source 17, 18 vers les conduites 9, 10 de remplissage lorsque la pression mesurée par l'organe 4 de détection est inférieure à un second seuil déterminé (par exemple inférieure à un barg (un bar relatif par exemple). Cette mesure de sécurité automatique empêche tout épandage du réservoir notamment en cas de rupture du flexible ou de mauvais branchement.

L'ensemble 19 de vanne(s) peut intégrer également des consignes de pression (consigne de pression Pc et premier seuil de sécurité qui correspond la pression maximale admissible dans le réservoir).

Par exemple l'élément mobile peut être déplaçable en rotation et ou en translation.

La [Fig. 2] schématise le cas d'un élément mobile en rotation. Par exemple, une sphère ou cylindre rotatif muni de secteurs plein/creusés permet de mitiger ou répartir le flux entre une entrée (reliée au flexible de la source 17) et deux sorties reliées respectivement aux deux conduites 9, 10 de remplissage. La position de l'élément mobile est par exemple le résultat des efforts données par une consigne de pression Pc et la pression P mesurée par l'ensemble 12 de capteurs.

Bien entendu ce mode de réalisation n'est pas limitatif. L'ensemble 19 de vannes pourrait comporter un élément mobile en translation notamment l'ensemble 19 de vannes pourrait comprendre une vanne à tiroir. Cf. par exemple le document FR2845451A1.

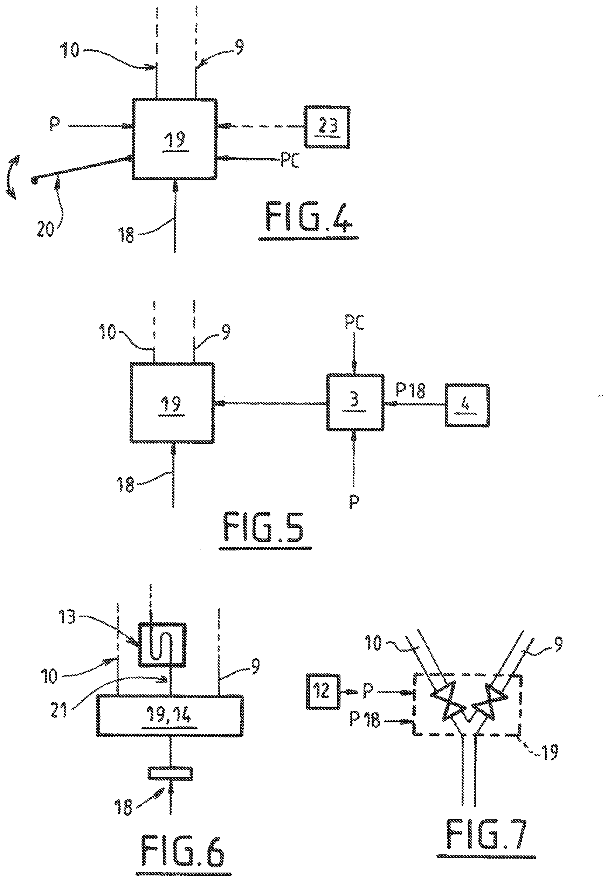

Bien entendu, et comme représenté à la [Fig. 5], l'ensemble 19 de vanne(s) de répartition pourrait également comprendre ou être constitué d'au moins une vanne pilotée électriquement et un dispositif 3 électronique de commande de la vanne pilotée configuré pour contrôler le flux en fonction d'une part de la consigne de pression prédéterminée Pc et, d'autre part, de la pression P mesurée par l'ensemble 12 de capteur(s).

Dans l'exemple de la [Fig. 7] deux vannes pilotées ou pneumatiques ou mécaniques assurent la régulation dans respectivement les deux conduites 9, 10.

Ainsi l'ensemble 19 de vanne(s) peut comprendre une ou plusieurs vannes pneumatiques ou commandées, vannes à deux voies, vannes à trois voies ou toute configuration ou combinaison permettant ce contrôle précité.

L'ensemble 19 de vanne(s) de répartition peut être configuré pour interrompre automatiquement tout passage de fluide provenant de la source 17 vers les conduites 9, 10 de remplissage lorsque la pression mesurée par l'ensemble 12 de capteur(s) est supérieure à un premier seuil de sécurité déterminé (par exemple ce premier seuil peut être égal à la pression maximale admissible du réservoir moins un décalage par exemple égal à un bar).

De plus, l'ensemble 19 de vanne(s) de répartition peut être configuré pour réaliser une répartition automatique du débit de fluide provenant de la source 17 majoritairement, et de préférence exclusivement, dans la seconde conduite 10 de remplissage lorsque la pression mesurée par l'ensemble 12 de capteur(s) est inférieure au seuil de sécurité et supérieur à la consigne de pression Pc. C'est-à-dire que lors du remplissage si la pression mesurée est comprise entre la pression de consigne Pc et le premier seuil de sécurité., l'ensemble 19 de vanne(s) privilégie le remplissage par la conduite 10.

De plus, l'ensemble 19 de vanne(s) de répartition peut être configuré pour réaliser une répartition automatique du débit de fluide provenant de la source 17 simultanément dans les deux conduites 9, 10 de remplissage lorsque la pression mesurée par l'ensemble 12 de capteur(s) est égale ou sensiblement égale à la consigne de pression Pc (c'est-à-dire la pression de service plus ou moins quelques pourcents). De préférence, le flux de remplissage est réparti à parts égales entre les deux conduites 9, 10 de remplissage mais pourrait être réparti dans des proportions différentes ajustables.

De plus, l'ensemble 19 de vanne(s) de répartition peut être configuré pour réaliser une répartition automatique du débit de fluide provenant de la source 17 majoritairement et de préférence exclusivement dans la première conduite 9 de remplissage lorsque la pression mesurée par l'ensemble 12 de capteur(s) est inférieure la consigne de pression Pc.

Ainsi, selon la pression mesurée dans le réservoir, l'ensemble 19 de vannes privilégie un remplissage par le haut (en pluie pour limiter/diminuer la pression) ou par le bas (pour augmenter la pression au sein du réservoir) ou les deux (pour maintenir la pression sensiblement constante).

Ainsi pour assurer un remplissage le livreur réalise une connexion d'une source de gaz liquéfié et sous pression au réservoir. Par exemple, il relie l'extrémité du flexible 18 à une borne ou bride du réservoir. Il relie ainsi la source au circuit de remplissage. Le livreur peut ouvrir une vanne d'isolation et l'ensemble 19 de vanne(s) va réaliser automatiquement (ou empêcher) le transfert de fluide vers le réservoir selon de consigne de pression Pc prédéterminée et de la pression mesurée par l'ensemble 12 de capteur(s).

Comme illustré à la [Fig. 4], le réservoir peut comprendre un afficheur 23 de l'état ou de la configuration ou de la position de l'ensemble 19 de vannes et/ou de la pression dans le réservoir.

De plus, le réservoir peut comprendre un organe 20 actionnable manuellement de commande de la position de l'ensemble 19 de vannes pour forcer manuellement la répartition du débit de fluide provenant de la source 17 dans les conduites 9, 10 de remplissage (et ou la fermeture du circuit de remplissage).

Comme illustré schématiquement à la [Fig. 6], la vanne 14 de régulation de la conduite 21 de mise en pression peut être comprise ou constituée par l'ensemble 19 de vanne(s) de répartition du flux de remplissage.

Par exemple l'ensemble de vanne(s) de répartition peut être situé sur la conduite 21 de mise en pression.

Par exemple, le boîtier de l'ensemble 19 de vanne(s) peut comprendre une sortie configurée pour assurer (hors phase de remplissage) le transit de liquide prélevé dans le réservoir vers la conduite 21 de mise en pression munie du réchauffeur 13.

Le liquide peut être prélevé dans le réservoir par exemple via une entrée de fluide reliée à l'extrémité amont de la conduite 21 de mise en pression.

Comme illustré à la [fig. 1], la conduite 21 de mise en pression peut comprendre une portion commune avec au moins l'une parmi : la première conduite 9 de remplissage (par exemple extrémités communes reliées à l'extrémité supérieure de la première enveloppe 1), la seconde conduite 10 de remplissage (par exemple extrémités communes reliées à la partie inférieure de la première enveloppe 1).

Cette recirculation avec réchauffage peut être réalisée automatiquement en réponse à une pression de service inférieure à la consigne prédéterminée Pc.

Ainsi, tout en étant simple et peu coûteuse (en particulier lorsque l'ensemble 19 de vanne(s) est purement mécanique et/ou pneumatique), le réservoir possède un circuit de remplissage qui régule automatiquement la pression dans le réservoir lors du remplissage. Ceci permet une remplissage plus rapide et plus sûr notamment de réservoirs fixes de grandes capacités.

Le réservoir est ainsi automatiquement protégé contre d'éventuelles surpressions pendant le remplissage.

Le cas échéant le dispositif peut permettre la purge et du flexible via une soupape de purge au niveau de la connexion entre le flexible et le circuit de remplissage du réservoir (cf. par exemple référence 24 [Fig. 3]).

Le dispositif peut avantageusement comporter une fonction d'interruption du remplissage (fermeture de l'ensemble 19 de vanne(s)) en cas de rupture du flexible (détectée par une chute de pression à ce niveau tel que décrit ci-dessus).

## Revendications

1. Réservoir de stockage de fluide cryogénique et notamment d'un mélange diphasique de liquide et de gaz, comprenant une première enveloppe (1) destinée à contenir le fluide cryogénique au moins une conduite (5, 7) de soutirage ayant une extrémité amont reliée à la première enveloppe (1) et configurée pour permettre le soutirage de fluide contenu dans la première enveloppe (1) vers l'extérieur du réservoir, un circuit de remplissage du réservoir, le circuit de remplissage comprenant une première conduite (9) de remplissage ayant une extrémité amont destinée à être reliée à une source de fluide et une extrémité aval reliée à la portion inférieure de la première enveloppe (1), le circuit de remplissage comprenant une seconde conduite (10) de remplissage ayant une extrémité amont destinée à être reliée à la source de fluide et une extrémité aval reliée à la portion supérieure de la première enveloppe (1), les extrémités amont des première (9) et seconde (10) conduites de remplissage étant destinées à être raccordées simultanément à une même source (17) de fluide, le circuit de remplissage comprenant un ensemble (19) de vanne(s) de répartition configuré pour permettre une répartition du fluide provenant de la source (17) de fluide dans les conduites (9, 10) de remplissage, le réservoir comprenant un ensemble (12) de capteur(s) mesurant la pression dans la première enveloppe (1), l'ensemble (19) de vanne(s) de répartition étant configuré pour réguler automatiquement la pression dans la première enveloppe (1) à une consigne de pression prédéterminée (Pc) lors d'un remplissage en assurant une répartition automatique du débit de fluide provenant de la source (17) dans les conduites (9, 10) de remplissage en fonction de la consigne de pression (Pc) et de la pression mesurée par l'ensemble (12) de capteur(s), **caractérisé en ce que** l'ensemble (19) de vanne(s) de répartition comprend un boîtier comportant une entrée de fluide destinée à être reliée à la source, deux sorties reliées respectivement aux deux conduites (9, 10) de remplissage et un répartiteur mobile en translation et/ou en rotation dans le boîtier et assurant une mise en relation ou non de l'entrée avec la ou les sorties selon la position du répartiteur mobile et **en ce que** l'ensemble (19) de vanne(s) de répartition est configuré pour interrompre automatiquement tout passage de fluide provenant de la source (17) vers les conduites (9, 10) de remplissage lorsque la pression mesurée par l'ensemble (12) de capteur(s) est supérieure à un premier seuil de sécurité déterminé, et **en ce que** l'ensemble (19) de vanne(s) de répartition est un dispositif uniquement mécanique comprenant au moins une vanne actionnée via un ensemble d'organe(s) de rappel notamment un ou des ressorts, et/ou uniquement pneumatique comprenant au moins une vanne actionnée pneumatiquement, et/ou l'ensemble (19) de vanne(s) de répartition étant sensible à la pression mesurée par l'ensemble (12) de capteur(s) mesurant la pression dans le première enveloppe (1), l'ensemble (19) de vanne(s) de répartition présentant un unique élément mobile obturant ou ouvrant un passage pour le fluide entre la source (17) de fluide et le ou les conduites (9, 10) de remplissage, ledit élément mobile étant déplacé dans une pluralité de positions selon la différence de pression entre d'une part un effort de tarage correspondant à la consigne de pression prédéterminée (Pc) et, d'autre part, la pression mesurée par l'ensemble (12) de capteur(s).

2. Réservoir selon la revendication 1 **caractérisé en ce qu'**il comprend un organe (4) de détection configuré pour mesurer la pression (P18) dans la source (17, 18) de fluide et l'ensemble (19) de vanne(s) de répartition est configuré pour interrompre tout passage de fluide provenant de la source (17, 18) vers les conduites (9, 10) de remplissage lorsque la pression mesurée par l'organe (4) de détection est inférieure à un second seuil déterminé.

3. Réservoir selon l'une quelconque des revendications 1 à 2, **caractérisé en ce que** le boîtier de l'ensemble (19) de vanne(s) comprend une entrée supplémentaire reliée à l'ensemble (12) de capteur(s) et/ou à une électronique (3) de commande et/ou à un ensemble de commande mécanique et/ou pneumatique tel que notamment un ensemble de ressort(s) et/ou membrane(s).

4. Réservoir selon l'une quelconque des revendications 1 à 3, **caractérisé en ce que** l'ensemble (19) de vanne(s) de répartition est configuré pour réaliser une répartition automatique du débit de fluide provenant de la source (17) majoritairement, et de préférence exclusivement, dans la seconde conduite (10) de remplissage lorsque la pression mesurée par l'ensemble (12) de capteur (s) est inférieure au seuil de sécurité et supérieur à la consigne de pression (Pc).

5. Réservoir selon l'une quelconque des revendications 1 à 4, **caractérisé en ce que** l'ensemble (19) de vanne(s) de répartition est configuré pour réaliser une répartition automatique du débit de fluide provenant de la source (17) simultanément dans les deux conduites (9, 10) de remplissage lorsque la pression mesurée par l'ensemble (12) de capteur (s) est égale à la consigne de pression (Pc) .

6. Réservoir selon l'une quelconque des revendications 1 à 5, **caractérisé en ce que** l'ensemble (19) de vanne(s) de répartition est configurée pour réaliser une répartition automatique du débit de fluide provenant de la source (17) majoritairement et de préférence exclusivement dans la première conduite (9) de remplissage lorsque la pression mesurée par l'ensemble (12) de capteur(s) est inférieure la consigne de pression (Pc).

7. Réservoir selon l'une quelconque des revendications 1 à 6, **caractérisé en ce qu'**il comporte un organe (4) de détection destiné à mesurer la pression (P18) dans la source (17, 18) de fluide et **en ce que** l'ensemble (19) de vanne(s) de répartition est configuré pour interrompre tout passage de fluide provenant de la source (17, 18) vers les conduites (9, 10) de remplissage lorsque la pression mesurée par l'organe (4) de détection est inférieure à un second seuil déterminé.

8. Réservoir selon l'une quelconque des revendications 1 à 7, **caractérisé en ce que** la pression mesurée par l'ensemble (12) de capteur(s) comprend au moins l'un parmi : la pression en partie supérieure de la première l'enveloppe (1), la pression en partie inférieure de la première l'enveloppe (1), un différentiel de pression entre la pression en partie supérieure de la première l'enveloppe (1) et la pression en partie inférieure de la première l'enveloppe (1).

9. Réservoir selon l'une quelconque des revendications 1 à 8, **caractérisé en ce que** le réservoir comprend une conduite (21) de mise en pression de l'enveloppe (1) interne comprenant une extrémité amont reliée à l'extrémité inférieure de la première enveloppe (1) et une extrémité aval reliée à la partie supérieure de la première enveloppe (1), la conduite (21) de mise en pression comprenant au moins une vanne (14) de régulation et un réchauffeur (13), notamment un échangeur de chaleur de vaporisation.

10. Réservoir selon la revendication 9, **caractérisé en ce que** la au moins une vanne (14) de régulation de la conduite (21) de mise en pression est comprise ou constituée par l'ensemble (19) de vanne(s) de répartition.

11. Procédé de remplissage d'un réservoir de stockage de fluide cryogénique conforme à l'une quelconque des revendications 1 à 10 avec du gaz liquéfié, le procédé comprenant une étape de connexion d'une source (17, 18) de gaz liquéfié sous pression au réservoir dans lequel une connexion fluidique est réalisée entre la source (17, 18) de gaz liquéfié et les extrémités amont des première (9) et seconde (10) conduites de remplissage, une étape de mesure de la pression dans l'enveloppe (1) interne du réservoir via l'ensemble (12) de capteur(s), une étape de transfert de fluide depuis la source (17, 18) vers l'intérieur de l'enveloppe (1) interne et une étape de répartition du flux de fluide dans les deux conduites (9, 10) de remplissage en fonction d'une consigne de pression (Pc) prédéterminée et de la pression mesurée par l'ensemble (12) de capteur(s).

## Patentansprüche

1. Lagertank für kryogenes Fluid und insbesondere für eine zweiphasige Mischung von Flüssigkeit und Gas, welcher eine erste Hülle (1), die dazu bestimmt ist, das kryogene Fluid zu enthalten, mindestens eine Entnahmeleitung (5, 7), die ein mit der ersten Hülle (1) verbundenes stromaufwärtiges Ende aufweist und dazu konfiguriert ist, die Entnahme von in der ersten Hülle (1) enthaltenem Fluid aus dem Tank zu ermöglichen, und einen Befüllkreislauf des Tanks beinhaltet, wobei der Befüllkreislauf eine erste Befüllleitung (9) beinhaltet, die ein stromaufwärtiges Ende, das dazu bestimmt ist, mit einer Fluidquelle verbunden zu sein, und ein stromabwärtiges Ende, das mit dem unteren Abschnitt der ersten Hülle (1) verbunden ist, aufweist, wobei der Befüllkreislauf eine zweite Befüllleitung (10) beinhaltet, die ein stromaufwärtiges Ende, das dazu bestimmt ist, mit der Fluidquelle verbunden zu sein, und ein stromabwärtiges Ende, das mit dem oberen Abschnitt der ersten Hülle (1) verbunden ist, aufweist, wobei die stromaufwärtigen Enden der ersten (9) und der zweiten (10) Befüllleitung dazu bestimmt sind, gleichzeitig an eine gleiche Fluidquelle (17) angeschlossen zu sein, wobei der Befüllkreislauf einen Verteilungsventil(e)-Satz (19) beinhaltet, der dazu konfiguriert ist, eine Verteilung des von der Fluidquelle (17) kommenden Fluids in den Befüllleitungen (9, 10) zu ermöglichen, wobei der Tank einen Sensor(en)-Satz (12) zum Messen des Drucks in der ersten Hülle (1) beinhaltet, wobei der Verteilungsventil(e)-Satz (19) dazu konfiguriert ist, den Druck in der ersten Hülle (1) bei einer Befüllung automatisch auf einen vorbestimmten Drucksollwert (Pc) zu regeln, indem er eine automatische Verteilung des Fluiddurchsatzes von der Quelle (17) in den Befüllleitungen (9, 10) in Abhängigkeit von dem Drucksollwert (Pc) und dem Druck, der von dem Sensor(en)-Satz (12) gemessen wird, sicherstellt, **dadurch gekennzeichnet, dass** der Verteilungsventil(e)-Satz (19) ein Gehäuse beinhaltet, das einen Fluideinlass, der dazu bestimmt ist, mit der Quelle verbunden zu sein, zwei Auslässe, die jeweils mit den zwei Befüllleitungen (9, 10) verbunden sind, und einen in dem Gehäuse translatorisch und/oder rotatorisch beweglichen Verteiler, der je nach Position des beweglichen Verteilers ein Verbinden oder Nicht-Verbinden des Einlasses mit dem oder den Auslässen sicherstellt, umfasst, und dass der Verteilungsventil(e)-Satz (19) dazu konfiguriert ist, jeglichen Fluiddurchlass von der Quelle (17) zu den Befüllleitungen (9, 10) automatisch zu unterbrechen, wenn der Druck, der von dem Sensor(en)-Satz (12) gemessen wird, über einem ersten bestimmten Sicherheitsschwellenwert liegt, und dass der Verteilungsventil(e)-Satz (19) eine ausschließlich mechanische Vorrichtung ist, die mindestens ein Ventil beinhaltet, das über einen Rückholglied(er)-Satz, insbesondere eine oder mehrere Federn, betätigt wird, und/oder eine ausschließlich pneumatische Vorrichtung ist, die mindestens ein pneumatisch betätigtes Ventil beinhaltet, und/oder der Verteilungsventil(e)-Satz (19) empfindlich gegenüber dem Druck ist, der von dem Sensor(en)-Satz (12) gemessen wird, der den Druck in der ersten Hülle (1) misst, wobei der Verteilungsventil(e)-Satz (19) ein einziges bewegliches Element aufweist, das einen Durchlass für das Fluid zwischen der Fluidquelle (17) und der oder den Befüllleitungen (9, 10) verschließt oder öffnet, wobei das bewegliche Element je nach der Druckdifferenz zwischen einerseits einer Tarierkraft, die dem vorbestimmten Drucksollwert (Pc) entspricht, und andererseits dem von dem Sensor(en)-Satz (12) gemessenen Druck in eine Vielzahl von Positionen bewegt wird.

2. Tank nach Anspruch 1, **dadurch gekennzeichnet, dass** er ein Detektionsorgan (4) beinhaltet, das dazu konfiguriert ist, den Druck (P18) in der Fluidquelle (17, 18) zu messen, und der Verteilungsventil(e)-Satz (19) dazu konfiguriert ist, jeglichen Fluiddurchlass von der Quelle (17, 18) zu den Befüllleitungen (9, 10) zu unterbrechen, wenn der Druck, der von dem Detektionsorgan (4) gemessen wird, unter einem zweiten bestimmten Schwellenwert liegt.

3. Tank nach einem der Ansprüche 1 bis 2, **dadurch gekennzeichnet, dass** das Gehäuse des Ventil(e)-Satzes (19) einen zusätzlichen Einlass beinhaltet, der mit dem Sensor(en)-Satz (12) und/oder mit einer Steuerelektronik (3) und/oder mit einem mechanischen und/oder pneumatischen Steuersatz, wie etwa insbesondere einem Feder- und/oder Membran(en)-Satz, verbunden ist.

4. Tank nach einem der Ansprüche 1 bis 3, **dadurch gekennzeichnet, dass** der Verteilungsventil(e)-Satz (19) dazu konfiguriert ist, eine automatische Verteilung des Fluiddurchsatzes von der Quelle (17) überwiegend und vorzugsweise ausschließlich in die zweite Befüllleitung (10) vorzunehmen, wenn der von dem Sensor(en)-Satz (12) gemessene Druck unter dem Sicherheitsschwellenwert und über dem Drucksollwert (Pc) liegt.

5. Tank nach einem der Ansprüche 1 bis 4, **dadurch gekennzeichnet, dass** der Verteilungsventil(e)-Satz (19) dazu konfiguriert ist, eine automatische Verteilung des Fluiddurchsatzes von der Quelle (17) gleichzeitig in die zwei Befüllleitungen (9, 10) vorzunehmen, wenn der von dem Sensor(en)-Satz (12) gemessene Druck gleich dem Drucksollwert (Pc) ist.

6. Tank nach einem der Ansprüche 1 bis 5, **dadurch gekennzeichnet, dass** der Verteilungsventil(e)-Satz (19) dazu konfiguriert ist, eine automatische Verteilung des Fluiddurchsatzes von der Quelle (17) überwiegend und vorzugsweise ausschließlich in die erste Befüllleitung (9) vorzunehmen, wenn der von dem Sensor(en)-Satz (12) gemessene Druck unter dem Drucksollwert (Pc) liegt.

7. Tank nach einem der Ansprüche 1 bis 6, **dadurch gekennzeichnet, dass** er ein Detektionsorgan (4) umfasst, das dazu bestimmt ist, den Druck (P18) in der Fluidquelle (17, 18) zu messen, und dass der Verteilungsventil (e)-Satz (19) dazu konfiguriert ist, jeglichen Fluiddurchlass von der Quelle (17, 18) zu den Befüllleitungen (9, 10) zu unterbrechen, wenn der Druck, der von dem Detektionsorgan (4) gemessen wird, unter einem zweiten bestimmten Schwellenwert liegt.

8. Tank nach einem der Ansprüche 1 bis 7, **dadurch gekennzeichnet, dass** der von dem Sensor(en)-Satz (12) gemessene Druck mindestens eines beinhaltet von: dem Druck im oberen Teil der ersten Hülle (1), dem Druck im unteren Teil der ersten Hülle (1), einer Druckdifferenz zwischen dem Druck im oberen Teil der ersten Hülle (1) und dem Druck im unteren Teil der ersten Hülle (1).

9. Tank nach einem der Ansprüche 1 bis 8, **dadurch gekennzeichnet, dass** der Tank eine Leitung (21) zur Druckbeaufschlagung der internen Hülle (1) beinhaltet, die ein stromaufwärtiges Ende, das mit dem unteren Ende der ersten Hülle (1) verbunden ist, und ein stromabwärtiges Ende, das mit dem oberen Teil der ersten Hülle (1) verbunden ist, beinhaltet, wobei die Druckbeaufschlagungsleitung (21) mindestens ein Regelventil (14) und einen Erhitzer (13), insbesondere einen Verdampfungswärmetauscher, beinhaltet.

10. Tank nach Anspruch 9, **dadurch gekennzeichnet, dass** das mindestens eine Regelventil (14) der Druckbeaufschlagungsleitung (21) in dem Verteilungsventil(e)-Satz (19) enthalten ist oder daraus gebildet wird.

11. Verfahren zur Befüllung eines Lagertanks für kryogenes Fluid nach einem der Ansprüche 1 bis 10 mit Flüssiggas, wobei das Verfahren Folgendes beinhaltet: einen Schritt des Verbindens einer Quelle (17, 18) für Flüssiggas unter Druck mit dem Tank, wobei eine Fluidverbindung zwischen der Flüssiggasquelle (17, 18) und den stromaufwärtigen Enden der ersten (9) und der zweiten (10) Befüllleitung hergestellt wird, einen Schritt des Messens des Drucks in der internen Hülle (1) des Tanks über den Sensor(en)-Satz (12), einen Schritt des Transferierens von Fluid von der Quelle (17, 18) in das Innere der internen Hülle (1) und einen Schritt des Verteilens des Fluidflusses in den zwei Befüllleitungen (9, 10) in Abhängigkeit von einem vorbestimmten Drucksollwert (Pc) und dem durch den Sensor(en)-Satz (12) gemessenen Druck.

## Claims

1. Tank for storing cryogenic fluid, and in particular a two-phase mixture of liquid and of gas, comprising a first casing (1) intended to contain the cryogenic fluid, at least one drawing-off pipe (5, 7) having an upstream end connected to the first casing (1) and being configured to allow fluid contained in the first casing (1) to be drawn off towards the outside of the tank, a circuit for filling the tank, the filling circuit comprising a first filling pipe (9) having an upstream end intended to be connected to a fluid source and a downstream end connected to the lower portion of the first casing (1), the filling circuit comprising a second filling pipe (10) having an upstream end intended to be connected to the fluid source and a downstream end connected to the upper portion of the first casing (1), the upstream ends of the first (9) and second (10) filling pipes being intended to be simultaneously connected to one and the same fluid source (17), the filling circuit comprising a set (19) of one or more distribution valve(s) configured to allow the fluid originating from the fluid source (17) to be distributed in the filling pipes (9, 10), the tank comprising a set (12) of one or more sensor(s) measuring the pressure in the first casing (1), the set (19) of one or more distribution valve (s) being configured to automatically regulate the pressure in the first casing (1) to a predetermined pressure setpoint (Pc) during filling by ensuring automatic distribution of the flow of fluid originating from the source (17) in the filling pipes (9, 10), as a function of the pressure setpoint (Pc) and of the pressure measured by the set (12) of one or more sensor (s), **characterized in that** the set (19) of one or more distribution valve(s) comprises a housing having a fluid inlet intended to be connected to the source, two outlets respectively connected to the two filling pipes (9, 10) and a translationally and/or rotationally movable distributor located in the housing and ensuring connection or non-connection of the inlet with the one or more outlets according to the position of the movable distributor and **in that** the set (19) of one or more distribution valve(s) is configured to automatically interrupt any passage of fluid originating from the source (17) towards the filling pipes (9, 10) when the pressure measured by the set (12) of one or more sensor (s) is higher than a first determined safety threshold, and **in that** the set (19) of one or more distribution valve(s) is a solely mechanical device comprising at least one valve that is actuated via a set of one or more return component(s), in particular one or more springs, and/or a solely pneumatic device comprising at least one valve that is actuated pneumatically, and/or the set (19) of one or more distribution valve(s) being sensitive to the pressure measured by the set (12) of one or more sensor (s) measuring the pressure in the first casing (1), the set (19) of one or more distribution valve(s) having a single movable element closing or opening a passage for the fluid between the fluid source (17) and the one or more filling pipes (9, 10), said movable element being moved into a plurality of positions according to the pressure difference between, on the one hand, a setting force corresponding to the predetermined pressure setpoint (Pc) and, on the other hand, the pressure measured by the set (12) of one or more sensor(s).

2. Tank according to Claim 1, **characterized in that** it comprises a detection component (4) configured to measure the pressure (P18) in the fluid source (17, 18) and the set (19) of one or more distribution valve(s) is configured to interrupt any passage of fluid originating from the source (17, 18) towards the filling pipes (9, 10) when the pressure measured by the detection component (4) is lower than a second determined threshold.

3. Tank according to either one of Claims 1 and 2, **characterized in that** the housing of the set (19) of one or more valve(s) comprises an additional inlet connected to the set (12) of one or more sensor (s) and/or to control electronics (3) and/or to a mechanical and/or pneumatic control assembly, in particular such as a set of one or more spring(s) and/or membrane(s).

4. Tank according to any one of Claims 1 to 3, **characterized in that** the set (19) of one or more distribution valve(s) is configured to implement automatic distribution of the flow of fluid originating from the source (17), predominantly, and preferably exclusively, in the second filling pipe (10) when the pressure measured by the set (12) of one or more sensor (s) is lower than the safety threshold and higher than the pressure setpoint (Pc).

5. Tank according to any one of Claims 1 to 4, **characterized in that** the set (19) of one or more distribution valve(s) is configured to simultaneously implement automatic distribution of the flow of fluid originating from the source (17) in the two filling pipes (9, 10) when the pressure measured by the set (12) of one or more sensor(s) is equal to the pressure setpoint (Pc).

6. Tank according to any one of Claims 1 to 5, **characterized in that** the set (19) of one or more distribution valve(s) is configured to implement automatic distribution of the flow of fluid originating from the source (17), predominantly, and preferably exclusively, in the first filling pipe (9) when the pressure measured by the set (12) of one or more sensor (s) is lower than the pressure setpoint (Pc).

7. Tank according to any one of Claims 1 to 6, **characterized in that** it has a detection component (4) intended to measure the pressure (P18) in the fluid source (17, 18), and **in that** the set (19) of one or more distribution valve(s) is configured to interrupt any passage of fluid originating from the source (17, 18) towards the filling pipes (9, 10) when the pressure measured by the detection component (4) is lower than a second determined threshold.

8. Tank according to any one of Claims 1 to 7, **characterized in that** the pressure measured by the set (12) of one or more sensor(s) comprises at least one from among: the pressure in the upper part of the first casing (1), the pressure in the lower part of the first casing (1), a pressure differential between the pressure in the upper part of the first casing (1) and the pressure in the lower part of the first casing (1).

9. Tank according to any one of Claims 1 to 8, **characterized in that** the tank comprises a pipe (21) for pressurizing the internal casing (1) comprising an upstream end connected to the lower end of the first casing (1) and a downstream end connected to the upper part of the first casing (1), the pressurization pipe (21) comprising at least one regulating valve (14) and a heater (13), in particular a vaporization heat exchanger.

10. Tank according to Claim 9, **characterized in that** the at least one regulating valve (14) of the pressurization pipe (21) is included in or made up of the set (19) of one or more distribution valve(s).

11. Method for filling a cryogenic fluid storage tank in accordance with any one of Claims 1 to 10 with liquefied gas, the method comprising a step of connecting a pressurized liquefied gas source (17, 18) to the tank, in which a fluidic connection is made between the liquefied gas source (17, 18) and the upstream ends of the first (9) and second (10) filling pipes, a step of measuring the pressure in the internal casing (1) of the tank via the set (12) of one or more sensor (s), a step of transferring fluid from the source (17, 18) towards the inside of the internal casing (1), and a step of distributing the stream of fluid in the two filling pipes (9, 10) as a function of a predetermined pressure setpoint (Pc) and of the pressure measured by the set (12) of one or more sensor(s).
